# FASCICULE DE BREVET EUROPEEN

(11) **EP 1 878 172 B1**
(45) Date de publication et mention de la délivrance du brevet: **12.11.2014**
(21) Numéro de dépôt: 06726263.4
(22) Date de dépôt: 21.03.2006
(51) Int. Cl.: H04L 12/70

(54) **CONTROLE DE LA RESERVATION DE RESSOURCES PARTAGEES DE CHEMINS DE CONNEXION DANS UN RESEAU DE COMMUNICATION A COMMUTATION D'ETIQUETTES DE TYPE "NON PAQUET"**
STEUERUNG DER BUCHUNG GEMEINSAM BENUTZTER RESSOURCEN VON VERBINDUNGSWEGEN IN EINEM NICHT-PAKET-LABEL-SWITCHING-KOMMUNIKATIONSNETZ
CONTROLLING SHARED RESOURCE BOOKING OF CONNECTION PATHS IN A NON-PACKET LABEL-SWITCHING COMMUNICATION NETWORK

(30) Priorité: 21.03.2005 FR 0550715
(43) Date de publication de la demande: 16.01.2008
(73) Titulaire: ALCATEL LUCENT, 92100 Boulogne-Billancourt (FR)
(72) Inventeur: VERCHERE, Dominique, F-91650 Breuillet (FR); BROCKMANN, Steffen, 71696 Moglingen (DE)
(74) Mandataire: Sciaux, Edmond
(86) Numéro de dépôt international: PCT/FR2006/050244
(87) Numéro de publication internationale: WO 2006/100407

(56) Documents cités:
- CCAMP GMPLS P&R DESIGN TEAM J P LANG Y REKHTER D PAPADIMITRIOU: "RSVP-TE Extensions in support of End-to-End Generalized Multi-Protocol Label Switching (GMPLS)-based Recovery" IETF STANDARD-WORKING-DRAFT, INTERNET ENGINEERING TASK FORCE, IETF, CH, vol. ccamp, no. 2, octobre 2004 (2004-10), XP015016579 ISSN: 0000-0004
- AWDUCHE ET AL: "RSVP-TE: Extensions to RSVP for LSP Tunnels" IETF STANDARD, INTERNET ENGINEERING TASK FORCE, IETF, CH, décembre 2001 (2001-12), XP015008988 ISSN: 0000-0003
- BERGER ET AL.: "Generalized Multi-Protocol Label Switching (GMPLS) Signaling Resource ReserVation Protocol-Traffic Engineering (RSVP-TE) Extensions" IETF RFC 3473, [Online] janvier 2003 (2003-01), XP002348544 Extrait de l'Internet: URL:www.ietf.org/rfc/rfc2473.txt> [extrait le 2005-10-10]
- VERCHÈRE ET AL.: "The Private User Network Interface?a GMPLS-compliant signaling interface for overlay-based multilayer networks" MARCH 2004 / VOL. 3, NO. 3 / JOURNAL OF OPTICAL NETWORKING, 27 février 2004 (2004-02-27), XP002348545

## Description

L'invention concerne le domaine des réseaux à commutation d'étiquettes, et plus particulièrement la réservation des ressources des chemins de connexion au sein de tels réseaux.

Comme le sait l'homme de l'art, il existe deux grandes catégories de réseaux à commutation d'étiquettes (ou « label switched network ») : les réseaux dits « à commutation de paquets » (ou « orientés connexion) qui présentent une architecture MPLS (pour « Multi Protocol Label Switching ») ou GMPLS (pour « Generalized MPLS »), comme par exemple les réseaux ATM, Frame Relay (FR), IP et Ethernet, et les réseaux dits « à commutation de circuits » (ou de type « non paquet ») qui présentent une architecture GMPLS, comme par exemple les réseaux TDM (tels que SONET/SDH, PDH, G.709), les réseaux à commutation de longueur d'onde ou les réseaux à commutation spatiale (comme par exemple la commutation depuis un port d'entrée vers un port de sortie).

Dans un réseau à commutation d'étiquettes les chemins de connexion sont appelés LSPs (pour « Label Switched Paths » - chemins à commutation d'étiquettes). Un chemin de connexion est dit « primaire » si il est complètement établi entre un noeud d'entrée (source) et un noeud de sortie (destination), via des noeuds intermédiaires. « Complètement établi » signifie ici que les ressources utilisées par le chemin primaire sont signalisées sur le réseau de contrôle et lui sont allouées par le réseau de données. Un chemin de connexion est dit « secondaire » si les ressources qu'il peut utiliser sont signalisées par le réseau de contrôle mais ne sont pas allouées par le réseau de données au chemin de connexion d'étiquettes secondaire. Généralement, un chemin de connexion « secondaire » est associé à un chemin de connexion primaire. Le chemin de connexion d'étiquettes secondaire est établi entre les mêmes noeuds d'entrée et de sortie que le chemin primaire, mais via d'autres noeuds intermédiaires que ce dernier. Le chemin de connexion d'étiquettes secondaire est destiné à remplacer le chemin de connexion primaire en cas de problème, de panne ou de dysfonctionnement.

Pour que le mécanisme de remplacement (ou de protection) puisse fonctionner, c'est-à-dire pour que l'on puisse re-router (ou basculer) le trafic d'un chemin primaire vers le chemin secondaire associé, il faut que des ressources de remplacement (ou de protection) aient été réservées au niveau des noeuds d'entrée et de sortie pour ces deux chemins associés.

Il est rappelé que la réservation des ressources permettant d'établir un chemin de connexion se fait à deux niveaux différents : le plan de contrôle (ou « control plane ») et le plan de données (ou « data plane »). La réservation au niveau du plan de données est de type physique (ou « hardware »). Elle nécessite une allocation de ressources effective, et donc la configuration des matrices de routage des noeuds du chemin de connexion. La réservation au niveau du plan de contrôle est de type logiciel (ou « software »). Elle n'assure pas que les ressources réservées sont effectivement utilisées ou même disponibles sur le plan de données au moment de la réservation logicielle.

Dans un réseau à commutation de paquets, il existe un mécanisme permettant de partager explicitement les ressources entre plusieurs chemins dé connexion. Sur les liens physiques du réseau, utilisés simultanément par plusieurs chemins de connexion de type paquet, les ressources physiques peuvent être partagées. En effet chaque chemin de connexion de type paquet transporte un trafic élastique ayant sa vitesse de transport proportionnelle à la bande passante réservée sur ce chemin de connexion. Grâce à ce mécanisme de partage, lorsque le re-routage d'un chemin de connexion primaire est nécessaire, on est quasiment certain que les ressources qui ont été réservées pour le chemin secondaire (de protection) vont lui être attribuées quasi immédiatement. En effet si la bande passante n'est pas disponible sur le lien physique, le mécanisme de partage s'appuie sur une fonction de contrôle de flux.

Mais, cela n'est pas le cas dans un réseau non paquet (comme par exemple un réseau TDM, à longueur d'onde, ou à ports physiques) où la bande passante allouée pour le chemin de connexion n'est pas fluide mais discret. En effet, les ressources non paquet ne sont pas partageables par un mécanisme de contrôle de flux. Comme des chemins secondaires (de protection) ne sont pas alloués au niveau du plan de données, si un re-routage (ou une restauration) doit être effectué(e), des messages de signalisation doivent être échangés entre les noeuds le long du chemin secondaire (de protection) afin de permettre l'allocation des ressources, au niveau du plan de données, des ressources déjà réservées au niveau du plan de contrôle le long du chemin secondaire.

Cet échange de messages prend du temps du fait qu'il nécessite un aller-retour de messages de signalisation entre les noeuds d'entrée et les noeuds de sortie et l'observation d'une durée de garde. Par exemple, pour effectuer la restauration d'un chemin de connexion défaillant, on doit effectuer une première phase de signalisation pour indiquer que le chemin primaire défaillant est dans un état non-opérationnel (par exemple l'état du chemin de connexion primaire est dit « administrativement hors service »), puis on doit effectuer une seconde phase de signalisation pour placer le chemin secondaire (de protection) dans un état de chemin primaire, c'est à dire qu'il faut allouer des ressources au chemin de connexion de protection. Pendant la phase de restauration du trafic correspondant à l'allocation des ressources au chemin de connexion de protection, une partie du trafic peut être perdue. De plus au moment de l'allocation des ressources (qui par exemple pouvaient être signalisées pour plusieurs chemins de protection secondaires) au chemin de connexion de protection secondaire, il est possible que les ressources aient été déjà allouées à d'autres chemins de connexion. En outre, ces deux phases impliquant un échange de signalisation aussi bien sur le chemin primaire que sur le chemin secondaire associé, en cas de défaillance de l'allocation des ressources d'un noeud intermédiaire du chemin secondaire, on ne peut pas effectuer la deuxième phase, ce qui empêche le re-routage.

Par ailleurs, il n'y a pas de garantie que les ressources réservées soient disponibles à l'instant du re-routage, c'est-à-dire que l'on puisse procéder à la configuration des matrices de routage des noeuds du chemin de connexion dédié à la protection.

CCAMP GMPLS P&R DESIGN TEAM J P LANG Y REKHTER D PAPADIMITRIOU: "RSVP-TE Extensions in support of End-to-End Generalized Multi-Protocol Label Switching (GMPLS)-based Recovery" IETF STANDARD-WORKING-DRAFT, INTERNET ENGINEERING TASK FORCE, IETF, CH, vol. ccamp, no. 2, octobre 2004 (2004-10), XP015016579 ISSN: 0000-0004 décrit des procédés de signalisation par le protocole Resource ReSerVation Protocol - Traffic Engineering pour permettre la protection de bout en bout d'un chemin de connexion dans un réseau GMPLS.

L'invention a donc pour but d'améliorer la situation dans les réseaux à commutation de circuits (ou de type non paquet), comme les réseaux TDM (par exemple SDH), les réseaux à commutation en longueur d'onde ou les réseaux à commutation spatiale (de ports physiques).

Elle propose à cet effet un procédé dédié au contrôle de la réservation de ressources pour des chemins de connexion (LSP), selon la revendication 1.

Le procédé selon l'invention peut comporter d'autres caractéristiques qui peuvent être prises séparément ou en combinaison, et notamment :
l'échange pour l'établissement de connexions non paquet partageant explicitement des ressources communes peut consister en :
   une première étape dans laquelle le noeud d'entrée transmet vers le noeud de sortie un premier message de demande d'établissement de chemin comportant l'identifiant de connexion du chemin de connexion primaire, la valeur d'étiquette de ressources non paquet commune, la valeur de champ de style de réservation représentative d'une demande de partage explicite de ressources choisies, et une première valeur de champ de protection spécifiant que le chemin de connexion primaire est autorisé à utiliser (et généralement utilise) les ressources partagées choisies (ce premier message de demande d'établissement de chemin de connexion peut traverser zéro, un ou plusieurs noeuds intermédiaires),
   ❖ une deuxième étape dans laquelle le noeud de sortie, après avoir traité le premier message de demande d'établissement de chemin, transmet en amont vers le noeud d'entrée un premier message de réservation comportant l'identifiant de connexion du chemin de connexion primaire, la valeur d'étiquette de ressources commune, la valeur de champ de style de réservation explicitement partagée, et la première valeur de champ de protection,
   ❖ une troisième étape dans laquelle le noeud d'entrée transmet au noeud de sortie un second message de demande d'établissement de chemin comportant l'identifiant de connexion du chemin de connexion secondaire, la valeur d'étiquette de ressources physiques commune, la valeur de champ de style de réservation, et une seconde valeur de champ de protection spécifiant que le chemin de connexion secondaire est destiné à protéger le chemin de connexion primaire avec les ressources partagées choisies, et
   ❖ une quatrième étape dans laquelle le noeud de sortie, après avoir traité le second message de demande d'établissement de chemin, transmet au noeud d'entrée un second message de réservation comportant l'identifiant de connexion du chemin de connexion secondaire, la valeur d'étiquette de ressources physiques commune, la valeur de champ de style de réservation, et la seconde valeur de champ de protection ;
- en cas de besoin de re-routage du trafic sur le chemin de connexion secondaire, le noeud d'entrée peut transmettre vers le noeud de sortie un message de demande d'établissement de chemin comportant l'identifiant de connexion du chemin de connexion primaire, la valeur d'étiquette de ressources physiques commune, la valeur de champ de style de réservation, et la seconde valeur de champ de protection spécifiant que le chemin de connexion primaire est destiné à protéger le chemin de connexion secondaire avec les ressources partagées choisies ;
- en cas de besoin de modification des ressources choisies, on peut prévoir :
   ❖ une première étape dans laquelle le noeud d'entrée transmet vers le noeud de sortie un premier message de demande d'établissement de chemin comportant l'identifiant de connexion du chemin de connexion primaire, la valeur d'étiquette de ressources commune, une valeur de champ de ressources modifiées, la valeur de champ de style de réservation représentative de la demande de partage explicite des ressources modifiées, et la première valeur de champ de protection spécifiant que le chemin de connexion primaire est autorisé à utiliser les ressources modifiées,
   ❖ une deuxième étape dans laquelle le noeud d'entrée transmet vers le noeud de sortie un second message de demande d'établissement de chemin de connexion comportant l'identifiant de connexion du chemin de connexion secondaire, la valeur d'étiquette de ressources commune, la valeur de champ de ressources modifiées, la valeur de champ de style de réservation, et la seconde valeur de champ de protection spécifiant que le chemin de connexion secondaire est destiné à protéger le chemin de connexion primaire avec les ressources modifiées et partage ses ressources avec le chemin de connexion primaire,
   ❖ une troisième étape dans laquelle le noeud d'entrée transmet vers le noeud de sortie un troisième message de demande d'établissement de chemin comportant l'identifiant de connexion du chemin de connexion primaire, la valeur d'étiquette de ressources commune, la valeur de champ de style de réservation, et la seconde valeur de champ de protection spécifiant que le chemin de connexion primaire est destiné à protéger le chemin de connexion secondaire avec les ressources modifiées, et
   ❖ une quatrième étape dans laquelle le noeud d'entrée transmet vers le noeud de sortie un quatrième message de demande d'établissement de chemin comportant l'identifiant de connexion du chemin de connexion secondaire, la valeur d'étiquette de ressources commune, la valeur de champ de style de réservation, et la première valeur de champ de protection spécifiant que le chemin de connexion secondaire est autorisé à utiliser les ressources modifiées. ;
      ➢ lors des première et troisième étapes les premier et troisième messages de demande d'établissement de chemin peuvent comporter chacun, en outre, un champ d'association dont la valeur est égale à l'identifiant de connexion du chemin de connexion secondaire, et lors des deuxième et quatrième étapes les deuxième et quatrième messages de demande d'établissement de chemin peuvent comporter chacun, en outre, un champ d'association dont la valeur est égale à l'identifiant de connexion du chemin de connexion primaire ;
      ➢ en cas de besoin de re-routage du trafic transporté par le chemin de connexion primaire, le noeud d'entrée peut transmettre au noeud de sortie un nouveau message de demande d'établissement de chemin comportant l'identifiant de connexion du chemin de connexion primaire, la valeur d'étiquette de ressources commune, la valeur de champ de style de réservation, et la seconde valeur de champ de protection spécifiant que le chemin de connexion primaire est destiné à protéger le chemin de connexion secondaire avec les ressources modifiées.

L'invention propose également un noeud à commutation d'étiquettes selon la revendication 8.

Le noeud (LSR) selon l'invention peut comporter d'autres caractéristiques qui peuvent être prises séparément ou en combinaison, et notamment:
- ses moyens de signalisation peuvent être chargés de :
   ❖ transmettre au noeud de sortie un premier message de demande d'établissement de chemin comportant l'identifiant de connexion du chemin de connexion primaire, la valeur d'étiquette de ressources (non paquet) commune, la valeur de champ de style de réservation, et une première valeur de champ de protection spécifiant que le chemin de connexion primaire est autorisé à utiliser les ressources partagées choisies,
   ❖ mettre à jour la structure de données en cas de réception d'un premier message de réservation provenant du noeud de sortie et comportant l'identifiant de connexion du chemin de connexion primaire, la valeur d'étiquette de ressources (non paquet) commune, la valeur de champ de style de réservation explicitement partagée, et la première valeur de champ de protection,
   ❖ transmettre au noeud de sortie un second message de demande d'établissement de chemin comportant l'identifiant de connexion du chemin de connexion secondaire, la valeur d'étiquette de ressources physiques commune, la valeur de champ de style de réservation, et une seconde valeur de champ de protection spécifiant que le chemin de connexion secondaire est destiné à protéger le chemin de connexion primaire avec les ressources partagées choisies, et
   ❖ mettre de nouveau à jour la structure de données en cas de réception d'un second message de réservation provenant du noeud de sortie et comportant l'identifiant de connexion du chemin de connexion secondaire, la valeur d'étiquette de ressources physiques commune, la valeur de champ de style de réservation, et la seconde valeur de champ de protection ;
- en cas de besoin de re-routage du trafic sur le chemin de connexion secondaire, les moyens de contrôle peuvent être chargés d'ordonner aux moyens de signalisation de transmettre vers le noeud de sortie un message de demande d'établissement de chemin comportant l'identifiant de connexion du chemin de connexion primaire, la valeur d'étiquette de ressources commune, la valeur de champ de style de réservation, et la seconde valeur de champ de protection spécifiant que le chemin de connexion primaire est destiné à protéger le chemin de connexion secondaire avec les ressources partagées choisies ;
- ses moyens de contrôle peuvent être chargés, en cas de réception par les moyens de signalisation d'un premier ou second message de demande d'établissement de chemin provenant d'un noeud dit d'entrée, d'analyser son contenu, puis d'ordonner aux moyens de signalisation de mettre à jour la structure de données, et de transmettre vers le noeud d'entrée un premier ou second message de réservation comportant l'identifiant de connexion du chemin de connexion primaire ou secondaire, la valeur d'étiquette de ressources physiques commune, la valeur de champ de style de réservation, et la première ou seconde valeur de champ de protection ;
- ses moyens de contrôle peuvent être chargés, en cas de besoin de modification des ressources choisies, d'ordonner aux moyens de signalisation de transmettre au noeud de sortie :
   ❖ un premier message de demande d'établissement de chemin comportant l'identifiant de connexion du chemin de connexion primaire, la valeur d'étiquette de ressources physiques commune, une valeur de champ de ressources modifiées, la valeur de champ de style de réservation (représentative de la demande de partage explicite des ressources modifiées), et la première valeur de champ de protection spécifiant que le chemin de connexion primaire est autorisé à utiliser les ressources modifiées,
   ❖ un second message de demande d'établissement de chemin comportant l'identifiant de connexion du chemin de connexion secondaire, la valeur d'étiquette de ressources physiques commune, la valeur de champ de ressources modifiées, la valeur de champ de style de réservation, et la seconde valeur de champ de protection spécifiant que le chemin de connexion secondaire est destiné à protéger le chemin de connexion primaire avec les ressources modifiées et partage ses ressources avec le chemin de connexion primaire,
   ❖ un troisième message de demande d'établissement de chemin comportant l'identifiant de connexion du chemin de connexion primaire, la valeur d'étiquette de ressources physiques commune, la valeur de champ de style de réservation, et la seconde valeur de champ de protection spécifiant que le chemin de connexion primaire est destiné à protéger le chemin de connexion secondaire avec les ressources modifiées, et
   ❖ un quatrième message de demande d'établissement de chemin comportant l'identifiant de connexion du chemin de connexion secondaire, la valeur d'étiquette de ressources physiques commune, la valeur de champ de style de réservation, et la première valeur de champ de protection spécifiant que le chemin de connexion secondaire est autorisé à utiliser les ressources modifiées ;
      ➢ ses moyens de contrôle peuvent être chargés d'ordonner aux moyens de signalisation d'adjoindre aux premier et troisième messages de demande d'établissement de chemin un champ d'association dont la valeur est égale à l'identifiant de connexion du chemin de connexion secondaire, et aux deuxième et quatrième messages de demande d'établissement de chemin un champ d'association dont la valeur est égale à l'identifiant de connexion du chemin de connexion primaire ;
      ➢ ses moyens de contrôle peuvent être chargés, en cas de besoin de re-routage du trafic par le chemin de connexion primaire, d'ordonner aux moyens de signalisation de transmettre au noeud de sortie un message de demande d'établissement de chemin comportant l'identifiant de connexion du chemin de connexion primaire, la valeur d'étiquette de ressources physiques commune, la valeur de champ de style de réservation, et la seconde valeur de champ de protection spécifiant que le chemin de connexion primaire est destiné à protéger le chemin de connexion secondaire avec les ressources modifiées ;
- ses moyens de contrôle peuvent faire partie des moyens de signalisation.

L'invention est particulièrement bien adaptée, bien que de façon non exclusive, aux réseaux TDM (comme par exemple SONET/SDH, PDH, G.709), aux réseaux à commutation de longueur d'onde, ou aux réseaux à commutation spatiale (comme par exemple commutation depuis un port d'entrée vers un port de sortie).

D'autres caractéristiques et avantages de l'invention apparaîtront à l'examen de la description détaillée ci-après, et du dessin annexé, sur lequel l'unique figure illustre de façon très schématique des noeuds d'entrée et de sortie, selon l'invention, entre lesquels sont établis deux chemins de connexion via des noeuds intermédiaires. Le dessin annexé pourra non seulement servir à compléter l'invention, mais aussi contribuer à sa définition, le cas échéant.

L'invention a pour objet de permettre un partage des ressources entre un chemin primaire et le chemin secondaire associé dans un réseau à commutation d'étiquettes de type non paquet.

Dans ce qui suit, on considère à titre d'exemple non limitatif que le réseau à commutation d'étiquettes est un réseau TDM (pour « Time Division Multiplexing » - réseau à multiplexage temporel) présentant une architecture GMPLS (pour « Generalized MPLS » ; MPLS pour « Multi Protocol Label Switching »). Mais, l'invention n'est pas limitée à ce type de réseau non paquet. Elle concerne en effet tous les réseaux non paquet (ou réseaux à commutation de circuits) présentant une architecture GMPLS, et notamment les réseaux TDM (comme par exemple SONET/SDH, PDH, G.709), les réseaux à commutation de longueur d'onde, ou les réseaux à commutation spatiale (comme par exemple la commutation depuis un port d'entrée vers un port de sortie).

Un réseau à commutation d'étiquettes ou LSN (pour « Label Switched Network ») comprend une multiplicité d'équipements de réseau constituant des noeuds Ni (ici i = 1 à 5, mais il peut prendre n'importe quelle valeur supérieure ou égale à deux). Ces noeuds Ni sont raccordés les uns aux autres et chargés de router entre eux des connexions (ici de type TDM), de sorte que des trafics puissent transiter par le réseau LSN.

Les noeuds Ni sont ici ce que l'homme de l'art appelle des routeurs à commutation d'étiquettes (ou LSRs pour « label switch routers »).

Parmi ces noeuds Ni, certains constituent ce que l'on appelle un noeud d'entrée (ou « ingress node »), c'est ici le cas du noeud N1, ou un noeud de sortie (ou « egress node »), c'est ici le cas du noeud N5, tandis que d'autres constituent ce que l'on appelle des noeuds intermédiaires, c'est ici le cas des noeuds N2 à N4.

De tels noeuds d'entrée et de sortie sont placés à deux « extrémités » du réseau LSN et peuvent être chacun raccordés à au moins un réseau d'utilisateurs ou d'entreprise(s). Par ailleurs, un noeud d'entrée N1 est couplé à un noeud de sortie N5 via deux chemins de connexion (ou chemins à commutation d'étiquettes - en anglais LSP pour « Label Switched Path ») L1 et L2 définissant chacun une connexion virtuelle (ou « LSP tunnel ») passant par un ensemble de noeuds Ni du réseau LSN.

Il est rappelé qu'un « lien » est une connexion physique entre deux routeurs LSR Ni (par exemple N1 et N2), tandis qu'un « chemin de connexion (ou LSP) » est un trajet entre un routeur LSR d'entrée N1 et un routeur LSR de sortie N5, défini par une séquence de liens physiques.

L'un des deux chemins de connexion (LSP) L1 est calculé de manière à optimiser la transmission de trafic de données entre son routeur LSR d'entrée N1 et son routeur LSR de sortie N5. Ce chemin de connexion L1 est appelé chemin primaire. Dans l'exemple illustré, ce chemin primaire L1 passe par les noeuds intermédiaires N2 et N4. L'autre chemin de connexion L2 est appelé chemin secondaire du fait qu'il est destiné à être substitué au chemin primaire L1 lorsque celui-ci est défaillant. Il constitue donc un chemin de protection pour le chemin primaire L1. Dans l'exemple illustré, ce chemin secondaire L2 passe par les noeuds intermédiaires N2, N3 et N4. A un instant donné seul l'un des deux chemins primaire L1 et secondaire L2 est utilisé pour transporter le trafic de données entre les noeuds d'entrée N1 et de sortie N5.

Pour que l'on puisse substituer quasi immédiatement le chemin primaire N1 par le chemin secondaire associé N5, ou inversement, il faut que des ressources aient été réservées communément pour ces deux chemins associés et qu'elles soient partagées tout au long des chemins L1 et L2, ou bien sur certaines parties communes des chemins L1 et L2 et notamment au niveau des routeurs d'entrée N1 et de sortie N5.

Pour ce faire, l'invention propose d'adjoindre au module de signalisation MS qui est implanté dans chaque routeur d'entrée N1 et dans chaque routeur de sortie N5 un module de contrôle MC chargé de gérer le partage des ressources entre chemins primaire L1 et secondaire L2.

Dans l'exemple non limitatif illustré le module de contrôle MC fait partie du module de signalisation MS. Mais, cela n'est pas obligatoire. Il peut en effet être dissocié du module de signalisation MS mais couplé à ce dernier.

Il est rappelé que le module de signalisation MS qui est implanté dans un routeur d'entrée N1 est chargé d'échanger des messages de signalisation avec le module de signalisation MS qui est implanté dans le routeur de sortie N5, ainsi qu'avec les modules de signalisation MS qui sont implantés dans les routeurs intermédiaires N2 à N4.

Deux types principaux de message de signalisation sont utilisés : les messages de demande d'établissement de chemin (ou « Path message ») et les messages de réservation (ou « Resv message »).

Les messages de demande d'établissement de chemin sont générés par le module de signalisation MS qui est implanté dans un routeur d'entrée N1 et sont destinés au module de signalisation MS qui est implanté dans le routeur de sortie N5. Les messages de réservation sont générés par le module de signalisation MS qui est implanté dans le routeur de sortie N5, en réponse à la réception d'un message de demande d'établissement de chemin, et sont destinés au module de signalisation MS qui est implanté dans le routeur d'entrée N1.

Dans le cas d'un réseau non paquet (TDM, ou à commutation de longueur d'onde, ou à commutation spatiale) les messages de signalisation sont transmis conformément au protocole de signalisation RSVP-TE. Ces messages comportent de nombreux objets (eux-mêmes constitués d'un ou plusieurs champs) qui ne seront pas détaillés ici, de façon exhaustive, du fait qu'ils sont bien connus de l'homme de l'art.

Il est simplement rappelé qu'un message de demande d'établissement de chemin comprend notamment un objet SENDER_TEMPLATE comportant un champ LSP ID dédié à l'identifiant LSP d'un chemin de connexion, un objet LABEL_SET comportant un champ dédié à la valeur de l'étiquette attribuée au chemin de connexion, un objet STYLE comportant un champ dédié au type de réservation de ressources (fixe ou partagé), et un objet SESSION_ATTRIBUTE comportant un champ spécifiant si la réservation de ressources est explicitement partagée ou non.

Par ailleurs, un message de réservation comprend notamment un objet FILTER_SPEC comportant le champ LSP ID dédié à l'identifiant LSP du chemin de connexion, un objet GENERALIZED_LABEL comportant le champ dédié à la valeur de l'étiquette attribuée au chemin de connexion, un objet STYLE comportant le champ dédié au type de réservation de ressources (fixe ou partagé), et un objet SESSION_ATTRIBUTE comportant le champ spécifiant si la réservation de ressources est explicitement partagée ou non.

Les informations contenues dans les messages de signalisation sont stockées par chaque module de signalisation MS dans des structures de données. Plus précisément, chaque noeud Ni comporte des moyens de mémorisation S1 et S2 dans lesquels sont respectivement stockées des premières structures de données, appelées PSB (pour « Path State Block »), contenant les données définissant chaque chemin de connexion dont il fait partie, et des secondes structures de données, appelées RSB (pour « Réservation State Block »), contenant entre autres les données relatives à l'état des réservation des ressources de chaque chemin de connexion dont il fait partie.

Chaque message de signalisation reçu par un noeud Ni sert à la mise à jour de l'une de ses premières structures de données PSB et de la seconde structure de données RSB associée.

Dans le cas d'un réseau non paquet (par exemple TDM), chaque seconde structure de données RSB est par exemple construite à partir des données des objets SESSION (identifiant de la session RSVP), IF_ID_RSVP_HOP (identifiant de l'interface du canal de données), FILTER_SPEC (identifiant du LSP pour la réservation), GENERALlZED_LABEL (identifiant logique de la ressource physique), RECORD ROUTE (pour enregistrer la route et optionnellement les ressources utilisées par le LSP), STYLE (style de réservation) et FLOW_SPEC (valeurs des paramètres de trafic).

L'invention propose d'associer au moins deux identifiants de chemins de connexion (LSP ID) différents à une même valeur d'étiquette de ressources non-paquet (LABEL) afin de partager les ressources au niveau des routeurs d'entrée N1 et de sortie N5 entre les chemins de connexion qui sont associés auxdits identifiants LSP. C'est la fonction principale des modules de contrôle MC et du procédé de contrôle de la réservation de ressources des chemins de connexion (LSPs) qu'ils mettent en oeuvre conjointement dans les routeurs d'entrée N1 et de sortie N5.

Le procédé selon l'invention est mis en oeuvre chaque fois qu'au moins deux chemins de connexion doivent partager des ressources du réseau LSN.

On considère dans ce qui suit à titre d'exemple non limitatif que les deux chemins sont un chemin primaire L1 et le chemin secondaire (de protection) associé L2.

Le module de contrôle MC du routeur d'entrée N1 commence par attribuer une valeur d'étiquette commune, par exemple E1, successivement aux chemins primaire L1 et secondaire L2, lesquels disposent déjà d'identifiants LSP différents, par exemple LSP1 et LSP2. Puis, il ordonne au module de signalisation MS de son routeur d'entrée N1 d'initier un échange de messages de signalisation avec le module de signalisation MS implanté dans le routeur de sortie N5.

Cet échange permet aux routeurs d'entrée N1 et de sortie N5 de procéder aux réservations de ressources partagées et donc à la mise à jour de leurs structures de données S1 et S2 respectives.

L'échange peut par exemple comporter les quatre étapes décrites ci-après.

Dans une première étape le module de signalisation MS du noeud d'entrée N1 génère à destination du routeur de sortie N5 un premier message de demande d'établissement de chemin (ou « Path message ») comportant l'identifiant de connexion LSP1 du chemin primaire L1, la valeur d'étiquette commune E1, une valeur de champ de style représentative d'une demande de partage explicite de ressources choisies (« shared explicit style desired »), ainsi qu'une première valeur d'un bit (par exemple S) d'un champ de protection (de l'objet PROTECTION) spécifiant que le chemin primaire L1 est autorisé à utiliser les ressources partagées choisies. La valeur de champ de style et la première valeur du champ de protection lui sont fournis par le module de contrôle MC. Par exemple, l'objet PROTECTION est de type C=2 et son champ « Secondaire » a un bit S dont une première valeur est égale à 0 indiquant qu'il est primaire.

Dans une deuxième étape le module de signalisation MS du noeud de sortie N5 réceptionne le premier message de demande d'établissement de chemin, puis il analyse son contenu. Le noeud de sortie N5 utilise le résultat de cette analyse pour procéder localement à la réservation de ressources pour le chemin primaire L1 au niveau du plan de contrôle et du plan de données. Une fois cette réservation effectuée il en informe son module de signalisation MS qui met à jour ses structures de données S1 et S2 et génère à destination du noeud d'entrée N1 un premier message de réservation (ou « Resv message ») comportant l'identifiant de connexion LSP1 du chemin primaire L1, la valeur d'étiquette commune E1, la valeur de champ de style (« shared explicit style desired »).

Dans une troisième étape le module de signalisation MS du noeud d'entrée N1 réceptionne le premier message de réservation, puis il analyse son contenu afin de mettre à jour ses structures de données S1 et S2.

A ce stade, le noeud d'entrée N1 a fini d'établir le premier tunnel LSP, c'est-à-dire le chemin primaire L1. Il lui faut alors établir le second tunnel LSP, c'est-à-dire le chemin secondaire L2, en faisant en sorte qu'il partage ses ressources avec le chemin primaire L1 au niveau des routeurs d'entrée N1 et de sortie N5.

Pour ce faire, le module de contrôle MC du noeud d'entrée N1 ordonne à son module de signalisation MS de générer à destination du noeud de sortie N5 un second message de demande d'établissement de chemin (« Path message ») comportant l'identifiant de connexion LSP2 du chemin secondaire L2, la valeur d'étiquette commune E1, la valeur de champ de style (« shared explicit style desired »), et une seconde valeur (par exemple égale à 1) du bit S du champ de protection (PROTECTION) spécifiant que le chemin secondaire L2 veut partager avec le chemin primaire L1 les ressources choisies et labellisées (ou étiquettées) au moyen de la valeur d'étiquette commune E1.

Dans une quatrième étape le module de signalisation MS du noeud de sortie N5 réceptionne le second message de demande d'établissement de chemin, puis il analyse son contenu. Le noeud de sortie N5 utilise le résultat de cette analyse pour procéder localement à la réservation de ressources partagées pour le chemin secondaire L2 au niveau du plan de contrôle et du plan de données. Une fois cette réservation effectuée il en informe son module de signalisation MS qui met à jour ses structures de données S1 et S2 et génère à destination du noeud d'entrée N1 un second message de réservation (ou « Resv message ») comportant l'identifiant de connexion LSP2 du chemin secondaire L2, la valeur d'étiquette commune E1, la valeur de champ de style (« shared explicit style desired »), et la seconde valeur du bit S du champ de protection (ici égale à 1).

Après cette quatrième étape, le noeud d'entrée N1 a fini d'établir le second tunnel LSP, c'est-à-dire le chemin secondaire L2.

Les ressources, nécessaires aux chemins primaire L1 et secondaire L2 entre les routeurs d'entrée N1 et de sortie N5, sont alors effectivement réservées et partagées. Ces ressources sont en outre provisoirement mises à la disposition du chemin primaire L1. Par conséquent, le trafic de données peut maintenant être transporté par le chemin primaire L1.

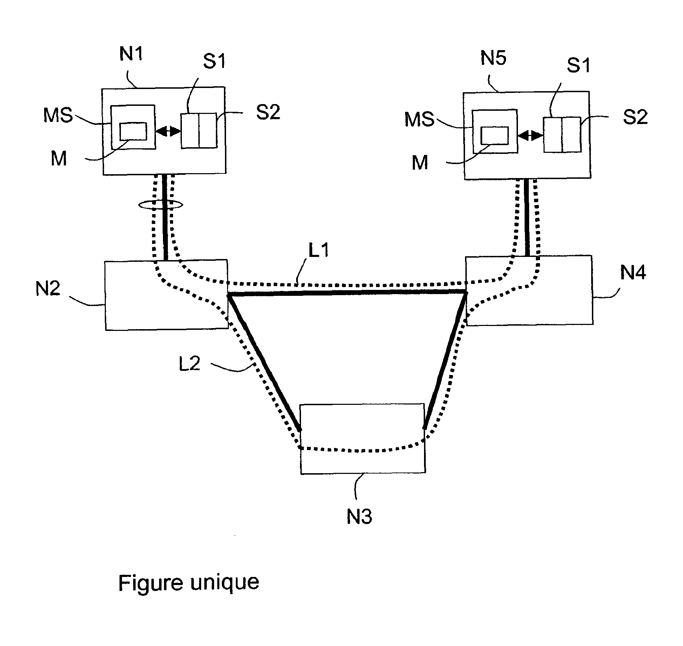

Sur la figure 1, à titre d'exemple, le lien sur lequel une ressource non-paquet est partagée est marqué par un ovale.

Deux situations peuvent alors survenir au sein du réseau LSN.

La première situation survient lorsqu'un problème (panne ou dysfonctionnement) apparaît au niveau du lien primaire L1 (sur un ou plusieurs liens et/ou dans un routeur intermédiaire). Cette situation impose un re-routage immédiat du chemin primaire L1 vers le chemin secondaire L2.

Dans cette situation, le module de contrôle MC du noeud d'entrée N1 ordonne à son module de signalisation MS de générer à destination du noeud de sortie N5 un message de demande d'établissement de chemin (« Path message ») comportant l'identifiant de connexion LSP1 du chemin primaire L1, la valeur d'étiquette commune E1, la valeur de champ de style (« shared explicit style desired »), et la seconde valeur (ici égale à 1) du bit S du champ de protection (PROTECTION) spécifiant que le chemin primaire L1 est désormais chargé de protéger le chemin secondaire L2 avec les ressources partagées initialement choisies.

Dans le même temps, le noeud d'entrée N1 alloue au chemin secondaire L2 les ressources réservées et partagées qu'il avait localement allouées au chemin primaire L1, puis son module de signalisation MS met à jour ses structures de données S1 et S2. Cette ré-allocation peut se faire de façon quasi-immédiate du fait que les chemins primaire L1 et secondaire L2, bien que disposant d'identifiants LSP différents (LSP1 et LSP2), sont associés à une valeur d'étiquette commune E1.

Lorsque le module de signalisation MS du noeud de sortie N5 réceptionne ce message de demande d'établissement de chemin (dédié au re-routage), il en analyse le contenu. Le noeud de sortie N5 utilise le résultat de cette analyse pour allouer au chemin secondaire L2 les ressources réservées et partagées qu'il avait localement allouées au chemin primaire L1. De nouveau cette ré-allocation peut se faire de façon quasi-immédiate du fait que les chemins primaire L1 et secondaire L2, bien que disposant d'identifiants LSP différents (LSP1 et LSP2), sont associés à une valeur d'étiquette commune E1. Une fois cette réservation effectuée le noeud de sortie N5 en informe son module de signalisation MS qui met à jour ses structures de données S1 et S2.

Des ressources entre les routeurs d'entrée N1 et de sortie N5 sont désormais mises à la disposition du chemin secondaire L2. Par conséquent, le trafic de données peut être re-routé sur le chemin secondaire L2.

La seconde situation survient lorsque le nombre de ressources du chemin primaire L1 (ou du chemin secondaire L2 si c'est celui qui est utilisé) doit être modifié.

On entend ici par « nombre de ressources » la quantité de bande passante et/ou la taille des moyens de stockage et/ou la capacité de calcul (ou CPU).

Dans cette situation, deux cas doivent être envisagés selon que la modification porte sur une réduction ou une augmentation du nombre de ressources.

En cas de besoin d'augmentation du nombre de ressources, il faut procéder à l'attribution d'une nouvelle valeur d'étiquette E2 commune aux chemins primaire L1 et secondaire L2, puis à une nouvelle réservation de ressources partagées conformément aux quatre étapes décrites précédemment.

En cas de besoin de réduction du nombre de ressources, on peut conserver la valeur d'étiquette E1 commune aux chemins primaire L1 et secondaire L2. Il faut cependant procéder à un échange de signalisation entre les routeurs d'entrée N1 et de sortie N5 afin qu'ils procèdent chacun de leur côté à la modification des ressources réservées le long du chemin L1 (qui peut être en partie ou intégralement le même que le chemin L2).

La modification peut être effectuée au moyen de l'objet PROTECTION du protocole de signalisation (ici RSVP-TE) et de l'objet ASSOCIATION. Ces deux objets requièrent chacun la définition d'une extension du protocole de signalisation. Par exemple, pour l'objet ASSOCIATION une extension du champ Association_Type peut indiquer que les deux chemins de connexion L1 et L2 partagent les mêmes ressources.

Lorsque la modification de ressource est effectuée au moyen de l'objet PROTECTION et de l'objet ASSOCIATION, l'échange peut de nouveau se dérouler en quatre étapes : deux premières étapes pour l'établissement des chemins de connexion et deux étapes suivantes pour la modification des ressources.

Dans une première étape le module de contrôle MC du noeud d'entrée N1 fournit à son module de signalisation MS la nouvelle valeur du champ définissant les ressources à modifier. Par exemple, la modification peut porter sur le remplacement d'une bande passante de taille égale à 622.08 Mbps (définie par la valeur de champ VC-4-4c) par une bande passante de taille égale à 155.52 Mbps (définie par la valeur de champ VC-4). Puis, le module de contrôle MC ordonne à son module de signalisation MS de générer à destination du routeur de sortie N5 un premier message de demande d'établissement de chemin (ou « Path message ») comportant l'identifiant de connexion LSP1 du chemin primaire L1, la valeur d'étiquette commune E1, une valeur de champ de ressources (par exemple VC-4-4c contenu dans l'objet SENDER_TSPEC), la valeur de champ de style (« shared explicit style desired ») représentative de la demande de partage explicite des (nouvelles) ressources, ainsi que la première valeur (0) du bit S du champ de protection (PROTECTION) spécifiant que le chemin primaire L1 est autorisé à utiliser les nouvelles ressources.

Le module de signalisation MS du noeud de sortie N5 réceptionne ce premier message de demande d'établissement de chemin, puis il analyse son contenu et le stocke dans une mémoire tampon.

Dans une deuxième étape le module de contrôle MC du noeud d'entrée N1 ordonne à son module de signalisation MS de générer à destination du routeur de sortie N5 un deuxième message de demande d'établissement de chemin (ou « Path message ») comportant l'identifiant de connexion LSP2 du chemin secondaire L2, la valeur d'étiquette commune E1, la valeur de champ de ressources modifiées (ici VC-4), la valeur de champ de style (« shared explicit style desired ») représentative de la demande de partage explicite des (nouvelles) ressources modifiées, ainsi que la valeur (1) du bit S du champ de protection (PROTECTION) spécifiant que le chemin secondaire L2 n'est pas autorisé à utiliser les ressources physiques. Quand le chemin de connexion L2 remplace le chemin de connexion L1 les ressources utilisées sont modifiées.

Dans une troisième étape, le module de contrôle MC du noeud d'entrée N1 ordonne à son module de signalisation MS de générer à destination du routeur de sortie N5 un troisième message de demande d'établissement de chemin (ou « Path message ») comportant l'identifiant de connexion LSP1 du chemin primaire L1, la valeur d'étiquette commune E1, la valeur de champ de style (« shared explicit style desired ») représentative de la demande de partage explicite des (nouvelles) ressources, ainsi que la seconde valeur (1) du bit S du champ de protection (PROTECTION) spécifiant que le chemin primaire L1 n'est plus autorisé à utiliser les ressources.

Dans une quatrième étape, le module de contrôle MC du noeud d'entrée N1 ordonne à son module de signalisation MS de générer à destination du routeur de sortie N5 un quatrième message de demande d'établissement de chemin (ou « Path message ») comportant l'identifiant de connexion LSP2 du chemin secondaire L2, la valeur d'étiquette commune E1, la valeur de champ de style (« shared explicit style desired ») représentative de la demande de partage explicite des (nouvelles) ressources modifiées, ainsi que la première valeur (0) du bit S du champ de protection (PROTECTION) spécifiant que le chemin secondaire L2 va utiliser les nouvelles ressources modifiées (VC-4).

Les nouvelles ressources modifiées, nécessaires aux chemins secondaire L1 et primaire L2 au niveau des routeurs d'entrée N1 et de sortie N5, sont alors effectivement réservées, partagées et mises à la disposition du chemin primaire L2. Par conséquent, le trafic de données qui empruntait le chemin primaire L1 avec les anciennes ressources peut maintenant emprunter le chemin primaire L2 avec les nouvelles ressources modifiées.

Afin que le trafic puisse de nouveau emprunter le chemin L1, une phase de re-routage, identique à celle décrite précédemment mais transposée au cas du re-routage du trafic du chemin L2 vers le chemin L1, doit être mise en oeuvre par le module de contrôle MC du routeur d'entrée N1.

Lorsque l'on utilise l'objet ASSOCIATION il est nécessaire de prévoir une extension du protocole de signalisation RSVP-TE. Par exemple, on peut prévoir une valeur supplémentaire égale à « Shared Resource (S) » (par exemple 2) pour le champ Association_Type de l'objet ASSOCIATION, le second champ d'association (Association_ID) présentant une valeur égale à l'identifiant LSP LSP2 (respectivement LSP1) pour la signalisation du chemin de connexion L1 (respectivement L2).

Il est important de noter que l'identifiant LSP1 (respectivement LSP2) est une étiquette qui est attribuée au chemin L1 (respectivement L2) pendant toute son existence, qu'il soit primaire ou secondaire.

Le module de contrôle MC et le module de signalisation MS des noeuds Ni selon l'invention peuvent être réalisés sous la forme de circuits électroniques, de modules logiciels (ou informatiques), ou d'une combinaison de circuits et de logiciels.

Dans les modes de réalisation ci-dessus, la valeur de champ de style représentative d'une demande de partage explicite des ressources permet à un noeud récepteur de spécifier explicitement la liste des chemins de connexion devant être admis dans une ressource non-paquet partagée sur un lien. Chaque noeud émetteur ayant réservé explicitement des ressources non-paquet est enregistré explicitement dans le contenu de la structure de données RSB. La structure de données RSB enregistre la demande de réservation de ressource qui arrive dans un message de réservation Resv. Le message Resv comporte l'étiquette qui désigne de manière unique la ressource non-paquet, comme par exemple un intervalle de temps d'un multiplex temporel.

La valeur de champ de style représentative d'une demande de partage explicite des ressources est interprétée par les noeuds comme une autorisation d'accepter la signalisation d'une pluralité de chemins de connexion ayant différents identifiants de chemin et ayant une même valeur d'étiquette, désignant donc la même ressource.

Le contenu des messages de signalisation, incluant la valeur- de champ de style représentative d'une demande de partage explicite des ressources et la valeur commune d'étiquette, définit explicitement quelles ressources non-paquet sont partagées entre le chemin primaire et le chemin secondaire. Les chemins de connexion primaire et secondaire sont réservés en ne comptant qu'une seule fois la ressource partagée désignée par la valeur d'étiquette commune sur le ou les liens correspondants. De ce fait, on évite de réserver plusieurs ressources non-paquet pour plusieurs chemins de connexion qui ne vont pas utiliser ces ressources simultanément, ce qui améliore l'exploitation des ressources du réseau.

L'invention peut être avantageusement appliquée à une architecture réseau dans laquelle deux couches du réseau sont contrôlées par deux plans de contrôle distincts, par exemple un plan de contrôle MPLS pour une couche réseau Internet Protocol et un plan de contrôle GMPLS pour une couche physique SDH (Synchronous Digital Hierarchy). Dans ce cas, on peut considérer l'exemple illustratif suivants : les noeuds N1 et N5 sont deux routeurs à commutation d'étiquette d'un domaine IP/MPLS. Le routeur N1 est l'émetteur et le routeur N5 est le récepteur des flots à transporter sur les deux chemins de connexion. Entre les deux routeurs N1 et N5, les paquets sont transportés sur un réseau de transport optique, par exemple encapsulés dans des trames SDH. Les noeuds N2, N3 et N4 du réseau de transport optique peuvent être par exemple des répartiteurs optiques. Les interfaces entre les clients du réseau de transport, à savoir les routeurs N1 et N5, et la périphérie du réseau de transport peuvent être réalisées conformément aux spécifications de l'Optical Internetworking Forum.

Selon ce mode de réalisation particulier, on établit un chemin de connexion protégé de bout en bout entre les routeurs à commutation d'étiquettes N1 et N5 tout en économisant des ressources entre le routeur N1 et le répartiteur optique de périphérie N2.

L'invention ne se limite pas aux modes de réalisation de procédé et de noeuds décrits ci-avant, seulement à titre d'exemple, mais elle englobe toutes les variantes que pourra envisager l'homme de l'art dans le cadre des revendications ci-après.

Ainsi, le mécanisme de re-routage d'un chemin L1 vers un chemin de protection L2 avec partage de ressources, présenté ci-avant, peut notamment être utilisé pour :
- la protection d'un chemin de connexion primaire L1 par un chemin de connexion secondaire L2 ;
- la modification des ressources allouées le long d'un chemin primaire L1 transportant un trafic de données ;
- l'optimisation des ressources allouées à un ensemble de chemins de connexion établis dans un réseau de type non paquet.

## Revendications

1. Procédé de contrôle de réservation de ressources pour des chemins de connexion (L1,L2); associés chacun à un identifiant de connexion, d'un réseau de communication à commutation d'étiquettes de type « non paquet » comprenant des noeuds à commutation d'étiquettes (N1-N5) entre lesquels peuvent être établis lesdits chemins de connexion (L1,L2) et comportant chacun une structure de données (S1,S2) représentatives de l'état de réservation de ressources de chaque chemin de connexion, dans lequel, en cas de besoin d'établissement entre deux noeuds d'entrée (N1) et de sortie (N5) dudit réseau de chemins de connexion primaire (L1) et secondaire (L2), pouvant être substitués l'un à l'autre, on effectue les étapes consistant à échanger des messages de signalisation entre lesdits noeuds d'entrée (N1) et de sortie (N5) contenant lesdits identifiants de connexion distincts, et des valeurs de champ de protection différentes pour lesdits chemins de connexion primaire (L1) et secondaire (L2), lesdits messages de signalisation étant transmis conformément au protocole de signalisation RSVP-TE et comportant des messages de demande d'établissement de chemin et des messages de réservation, et à mettre à jour les structures de données au sein de tous les noeuds situés entre les desdits noeuds d'entrée (N1) et de sortie (N5) au moyen des informations transportées par lesdits messages de signalisation échangés, **caractérisé en ce qu'**il comporte les étapes consistant à :
attribuer une valeur d'étiquette de ressources non-paquet commune auxdits chemins de connexion primaire et secondaire, ladite valeur d'étiquette désignant des ressources non-paquet devant être partagées entre lesdits chemins de connexion primaire et secondaire sur au moins un lien commun auxdits chemins de connexion primaire et secondaire,
transporter ladite valeur d'étiquette de ressources commune dans un objet LABEL_SET d'un message de demande d'établissement de chemin et dans un objet GENERALIZED_LABEL d'un message de réservation, ladite valeur d'étiquette de ressources commune étant transportée en combinaison avec une valeur de champ de style de réservation représentative d'une demande de partage explicite desdites ressources entre lesdits chemins de connexion primaire (L1) et secondaire (L2) et les valeurs de champ de protection différentes pour lesdits chemins de connexion primaire (L1) et secondaire (L2),
et allouer localement lesdites ressources partagées à l'un desdits chemins de connexion primaire (L1) et secondaire (L2) en fonction desdites valeurs de champ de protection qui spécifient explicitement celui qui utilise lesdites ressources partagées.

2. Procédé selon la revendication 1, **caractérisé en ce que**, afin de partager des ressources non-paquet au niveau des noeuds d'entrée et de sortie, ledit échange consiste en :
- une première étape dans laquelle ledit noeud d'entrée (N1) transmet vers ledit noeud de sortie (N5) un premier message de demande d'établissement de chemin comportant l'identifiant de connexion dudit chemin de connexion primaire (L1), ladite valeur d'étiquette de ressources commune, la valeur de champ de style de réservation représentative d'une demande de partage explicite de ressources choisies, et une première valeur de champ de protection spécifiant que ledit chemin de connexion primaire (L1) est autorisé à utiliser lesdites ressources partagées choisies,
- une deuxième étape dans laquelle ledit noeud de sortie (N5), après avoir traité ledit premier message de demande d'établissement de chemin, transmet en amont vers ledit noeud d'entrée (N1) un premier message de réservation comportant l'identifiant de connexion dudit chemin de connexion primaire (L1), ladite valeur d'étiquette de ressources commune, ladite valeur de champ de style de réservation représentative de la demande de partage explicite de ressources, et ladite première valeur de champ de protection,
- une troisième étape dans laquelle ledit noeud d'entrée (N1) transmet audit noeud de sortie (N5) un second message de demande d'établissement de chemin comportant l'identifiant de connexion dudit chemin de connexion secondaire (L2), ladite valeur d'étiquette de ressources commune, ladite valeur de champ de style de réservation représentative de la demande de partage explicite de ressources, et une seconde valeur de champ de protection spécifiant que ledit chemin de connexion secondaire (L2) est destiné à protéger ledit chemin de connexion primaire (L1) avec lesdites ressources partagées, et
- une quatrième étape dans laquelle ledit noeud de sortie (N5), après avoir traité ledit second message de demande d'établissement de chemin, transmet audit noeud d'entrée (N1) un second message de réservation comportant l'identifiant de connexion dudit chemin de connexion secondaire (L2), ladite valeur d'étiquette de ressources commune, ladite valeur de champ de style de réservation représentative de la demande de partage explicite de ressources, et ladite seconde valeur de champ de protection.

3. Procédé selon l'une des revendications 1 et 2, **caractérisé en ce qu'**en cas de besoin de re-routage de trafic sur ledit chemin de connexion secondaire (L2), ledit noeud d'entrée (N1) transmet vers ledit noeud de sortie (N5) un message de demande d'établissement de chemin comportant l'identifiant de connexion dudit chemin de connexion primaire (L1), ladite valeur d'étiquette de ressources commune, ladite valeur de champ de style de réservation représentative de la demande de partage explicite de ressources choisies, et ladite seconde valeur de champ de protection spécifiant que ledit chemin de connexion primaire (L1) est destiné à protéger ledit chemin de connexion secondaire (L2) avec lesdites ressources partagées choisies.

4. Procédé selon l'une des revendications 1 à 3, **caractérisé en ce qu'**en cas de besoin de modification desdites ressources choisies, on prévoit :
- une première étape dans laquelle ledit noeud d'entrée (N1) transmet vers ledit noeud de sortie (N5) un premier message de demande d'établissement de chemin comportant l'identifiant de connexion dudit chemin de connexion primaire (L1), ladite valeur d'étiquette de ressources commune, une valeur de champ de ressources modifiée, ladite valeur de champ de style de réservation représentative de la demande de partage explicite des ressources modifiées, et ladite première valeur de champ de protection spécifiant que ledit chemin de connexion primaire (L1) est autorisé à utiliser lesdites ressources modifiées partagées,
- une deuxième étape dans laquelle ledit noeud d'entrée (N1) transmet vers ledit noeud de sortie (N5) un second message de demande d'établissement de chemin de connexion comportant l'identifiant de connexion dudit chemin de connexion secondaire (L2), ladite valeur d'étiquette de ressources commune, ladite valeur de champ de ressources modifiée, ladite valeur de champ de style de réservation représentative de la demande de partage explicite des ressources modifiées, et ladite seconde valeur de champ de protection spécifiant que ledit chemin de connexion secondaire (L2) est destiné à protéger ledit chemin de connexion primaire (L1) avec lesdites ressources modifiées et partage ses ressources avec ledit chemin de connexion primaire (L1),
- une troisième étape dans laquelle ledit noeud d'entrée (N1) transmet audit noeud de sortie (N5) un troisième message de demande d'établissement de chemin comportant l'identifiant de connexion dudit chemin de connexion primaire (L1), ladite valeur d'étiquette de ressources commune, ladite valeur de champ de style de réservation représentative de la demande de partage explicite des ressources modifiées, et ladite seconde valeur de champ de protection spécifiant que ledit chemin de connexion primaire (L1) est destiné à protéger ledit chemin de connexion secondaire (L2) avec lesdites ressources modifiées, et
- une quatrième étape dans laquelle ledit noeud d'entrée (N1) transmet vers ledit noeud de sortie (N5) un quatrième message de demande d'établissement de chemin comportant l'identifiant de connexion dudit chemin de connexion secondaire (L2), ladite valeur d'étiquette de ressources commune, ladite valeur de champ de style de réservation représentative de la demande de partage explicite des ressources modifiées, et ladite première valeur de champ de protection spécifiant que ledit chemin de connexion secondaire (L2) est autorisé à utiliser lesdites ressources modifiées.

5. Procédé selon la revendication 4, **caractérisé en ce que** :
- lors desdites première et troisième étapes lesdits premier et troisième messages de demande d'établissement de chemin comportent chacun en outre un champ d'association dont la valeur est égale à l'identifiant de connexion dudit chemin de connexion secondaire (L2), et
- lors desdites deuxième et quatrième étapes lesdits deuxième et quatrième messages de demande d'établissement de chemin comportent chacun en outre un champ d'association dont la valeur est égale à l'identifiant de connexion dudit chemin de connexion primaire (L1).

6. Procédé selon l'une des revendications 4 et 5, **caractérisé en ce qu'**en cas de besoin de re-routage du trafic transporté par ledit chemin de connexion primaire (L1), ledit noeud d'entrée (N1) transmet audit noeud de sortie (N5) un nouveau message de demande d'établissement de chemin comportant l'identifiant de connexion dudit chemin de connexion primaire (L1), ladite valeur d'étiquette de ressources commune, ladite nouvelle valeur de champ de style de réservation représentative de la demande de partage explicite de nouvelles ressources choisies, et ladite seconde valeur de champ de protection spécifiant que ledit chemin de connexion primaire (L1) est destiné à protéger ledit chemin de connexion secondaire (L2) avec lesdites nouvelles ressources partagées modifiées.

7. Procédé selon la revendication 1, **caractérisé en ce que** lesdits noeuds d'entrée (N1) et de sortie (N5) sont des routeurs d'une couche réseau IP/MPLS, lesdits chemins de connexion traversant des noeuds (N2-N4) d'un réseau de transport optique entre lesdits routeurs, ledit au moins un lien commun s'étendant entre le noeud d'entrée (N1) et un desdits noeuds optiques (N2).

8. Noeud à commutation d'étiquettes (N1) pour un réseau de communication à commutation d'étiquettes de type «non paquet », ledit noeud comprenant :
des moyens de signalisation (MS) agencés pour échanger des messages de signalisation conformément au protocole de signalisation RSVP-TE avec d'autre noeuds à commutation d'étiquettes (Ni) dudit réseau, pour permettre la réservation de ressources de chemins de connexion (L1,L2), associés chacun à un identifiant de connexion et débutant au niveau dudit noeud (N1),
une structure de données (S1,S2) représentative de l'état de réservation des ressources contrôlées associées auxdits chemins de connexion (L1,L2),
et des moyens de contrôle (MC) agencés, en cas de besoin d'établissement entre ledit noeud (N1) et un noeud de sortie (N5) dudit réseau de chemins de connexion primaire (L1) et secondaire (L2), pouvant être substitués l'un à l'autre, pour commander auxdits moyens de signalisation (MS) d'échanger avec différents noeuds intermédiaires jusqu'audit noeud de sortie (N5) des messages de signalisation contenant lesdits identifiants de connexion distincts, et des valeurs de champ de protection différentes pour lesdits chemins de connexion primaire (L1) et secondaire (L2),
lesdits moyens de signalisation (MS) étant agencés pour :
- transmettre audit noeud de sortie (MS) un premier message de demande d'établissement de chemin comportant l'identifiant de connexion dudit chemin de connexion primaire (L1), et une première valeur de champ de protection,
- mettre à jour ladite structure de données (S1,S2) en cas de réception d'un premier message de réservation provenant dudit noeud de sortie (N5) et comportant l'identifiant de connexion dudit chemin de connexion primaire (L1), et ladite première valeur de champ de protection,
- transmettre audit noeud de sortie (N5) un second message de demande d'établissement de chemin comportant l'identifiant de connexion dudit chemin de connexion secondaire (L2), et une seconde valeur de champ de protection spécifiant que ledit chemin de connexion secondaire (L2) est destiné à protéger ledit chemin de connexion primaire (L1), et
- mettre de nouveau à jour ladite structure de données (S1,S2) en cas de réception d'un second message de réservation provenant dudit noeud de sortie (N5) et comportant l'identifiant de connexion dudit chemin de connexion secondaire (L2), et ladite seconde valeur de champ de protection, **caractérisé en ce que**:
- lesdits messages de demande d'établissement de chemin sont transmis avec une valeur d'étiquette de ressources non paquet commune auxdits chemins de connexion primaire (L1) et secondaire (L2) et une valeur de champ de style de réservation représentative d'une demande de partage explicite de ressources choisies entre lesdits chemins de connexion primaire (L1) et secondaire (L2), ladite valeur d'étiquette désignant des ressources non-paquet devant être partagées entre lesdits chemins de connexion primaire et secondaire sur au moins un lien commun auxdits chemins de connexion primaire et secondaire au niveau dudit noeud, et
- dans le cas où lesdits messages de réservation reçus contiennent ladite valeur d'étiquette de ressources commune et ladite valeur de champ de style de réservation représentative de la demande de partage explicite de ressources choisies, ledit noeud est apte à allouer localement lesdites ressources partagées audit chemin de connexion primaire (L1) conformément aux valeurs de champ de protection qui spécifient que ledit chemin de connexion primaire (L1) est autorisé à utiliser lesdites ressources partagées choisies.

9. Noeud selon la revendication 8, **caractérisé en ce qu'**en cas de besoin de re-routage de trafic sur ledit chemin de connexion secondaire (L2), lesdits moyens de contrôle (MC) sont agencés pour ordonner auxdits moyens de signalisation (MS) de transmettre vers ledit noeud de sortie (N5) un message de demande d'établissement de chemin comportant l'identifiant de connexion dudit chemin de connexion primaire (L1), ladite valeur d'étiquette de ressources commune, ladite valeur de champ de style de réservation représentative de la demande de partage explicite de ressources choisies, et ladite seconde valeur de champ de protection spécifiant que ledit chemin de connexion primaire (L1) est destiné à protéger ledit chemin de connexion secondaire (L2) avec lesdites ressources partagées choisies.

10. Noeud selon la revendication 9, **caractérisé en ce que** lesdits moyens de contrôle (MC) sont agencés en cas de réception par lesdits moyens de signalisation (MS) d'un premier ou second message de demande d'établissement de chemin provenant d'un noeud dit d'entrée (N1) pour analyser son contenu et ordonner auxdits moyens de signalisation (MS) de mettre à jour la structure de données (S1,S2) et transmettre vers ledit noeud d'entrée (N1) un premier ou second message de réservation comportant l'identifiant de connexion dudit chemin de connexion primaire (L1) ou secondaire (L2), ladite valeur d'étiquette de ressources commune, ladite valeur de champ de style de réservation représentative de la demande de partage explicite de ressources choisies, et ladite première ou seconde valeur de champ de protection.

11. Noeud selon l'une des revendications 8 à 10, **caractérisé en ce que** lesdits moyens de contrôle (MC) sont agencés, en cas de besoin de modification desdites ressources choisies, pour ordonner auxdits moyens de signalisation (MS) de transmettre audit noeud de sortie (N5) :
- un premier message de demande d'établissement de chemin comportant l'identifiant de connexion dudit chemin de connexion primaire (L1), ladite valeur d'étiquette de ressources commune, une valeur de champ de ressources modifiée, ladite valeur de champ de style de réservation représentative de la demande de partage explicite des ressources modifiées, et ladite première valeur de champ de protection spécifiant que ledit chemin de connexion primaire (L1) est autorisé à utiliser lesdites ressources modifiées,
- un second message de demande d'établissement de chemin comportant l'identifiant de connexion dudit chemin de connexion secondaire (L2), ladite valeur d'étiquette de ressources commune, ladite valeur de champ de ressources modifiée, ladite valeur de champ de style de réservation représentative de la demande de partage explicite des ressources modifiées, et ladite seconde valeur de champ de protection spécifiant que ledit chemin de connexion secondaire (L2) est destiné à protéger ledit chemin de connexion primaire (L1) avec lesdites ressources modifiées,
- un troisième message de demande d'établissement de chemin comportant l'identifiant de connexion dudit chemin de connexion primaire (L1), ladite valeur d'étiquette de ressources commune, ladite valeur de champ de style de réservation représentative de la demande de partage explicite des ressources modifiées, et ladite seconde valeur de champ de protection spécifiant que ledit chemin de connexion primaire (L1) est destiné à protéger ledit chemin de connexion secondaire (L2) avec lesdites ressources modifiées, et
- un quatrième message de demande d'établissement de chemin comportant l'identifiant de connexion dudit chemin de connexion secondaire (L2), ladite valeur d'étiquette de ressources commune, ladite valeur de champ de style de réservation représentative de la demande de partage explicite des ressources modifiées, et ladite première valeur de champ de protection spécifiant que ledit chemin de connexion secondaire (L2) est autorisé à utiliser lesdites ressources modifiées.

12. Noeud selon la revendication 11, **caractérisé en ce que** lesdits moyens de contrôle (MC) sont agencés pour ordonner auxdits moyens de signalisation (MS) d'adjoindre auxdits premier et troisième messages de demande d'établissement de chemin un champ d'association dont la valeur est égale à l'identifiant de connexion dudit chemin de connexion secondaire (L2), et auxdits deuxième et quatrième messages de demande d'établissement de chemin un champ d'association dont la valeur est égale à l'identifiant de connexion dudit chemin de connexion primaire (L1).

13. Noeud selon l'une des revendications 11 et 12, **caractérisé en ce que** lesdits moyens de contrôle (MC) sont agencés, en cas de besoin de re-routage du trafic sur ledit chemin de connexion primaire (L1), pour ordonner auxdits moyens de signalisation (MS) de transmettre audit noeud de sortie (N5) un message de demande d'établissement de chemin comportant l'identifiant de connexion dudit chemin de connexion primaire (L1), ladite valeur d'étiquette de ressources commune, ladite valeur de champ de style de réservation représentative de la demande de partage explicite des ressources modifiées, et ladite seconde valeur de champ de protection spécifiant que ledit chemin de connexion primaire (L1) est destiné à protéger ledit chemin de connexion secondaire (L2) avec lesdites ressources modifiées.

14. Noeud selon l'une des revendications 8 à 13, **caractérisé en ce que** lesdits moyens de contrôle (MC) font partie desdits moyens de signalisation (MS).

## Patentansprüche

1. Verfahren zur Steuerung der Reservierung von Ressourcen für Verbindungspfade (L1, L2), welche jeweils mit einer Verbindungskennung assoziiert sind, eines nicht auf Paketen basierenden labelvermittelten Kommunikationsnetzwerks mit mehreren labelvermittelten Knoten (N1-N5), zwischen denen die besagten Verbindungspfade (L1, L2) aufgebaut werden können und welche jeweils eine Struktur von Daten (S1, S2), die für den Zustand der Ressourcenreservierung eines jeden Verbindungspfades repräsentativ sind, aufweisen, wobei man, wenn der Aufbau eines primären (L1) und eines sekundären (L2) Verbindungspfades, welche einander ersetzen können, zwischen einem Eingangsknoten (N1) und einem Ausgangsknoten (N5) des besagten Netzwerks erforderlich ist, die Schritte, die darin bestehen, Signalisierungsnachrichten, welche die besagten eindeutigen Verbindungskennungen sowie unterschiedliche Schutzfeld-Werte für den besagten primären (L1) und den besagten sekundären (L2) Verbindungspfad enthalten, zwischen dem besagten Eingangsknoten (N1) und dem besagten Ausgangsknoten (N5) auszutauschen, durchfuhrt, wobei die besagten Signalisierungsnachrichten gemäß dem Signalisierungsprotokoll RSVP-TE übertragen werden und Anforderungsnachrichten für den Aufbau eines Pfades sowie Reservierungsnachrichten enthalten, und darin bestehen, die Datenstrukturen in allen zwischen dem besagten Eingangsknoten (N1) und dem besagten Ausgangsknoten (N5) angeordneten Knoten anhand der in den besagten ausgetauschten Signalisierungsnachrichten transportierten Informationen zu aktualisieren, **dadurch gekennzeichnet, dass** es die folgenden Schritte umfasst:
Zuweisen eines gemeinsamen Labelwertes für nicht auf Paketen basierende Ressourcen an den besagten primären und den besagten sekundären Verbindungspfad, wobei der besagte Labelwert der nicht auf Paketen basierenden Ressourcen, welche zwischen dem besagten primären und dem besagten sekundären Verbindungspfade auf zumindest einem dem besagten primären und dem besagten sekundären Verbindungspfad gemeinsamen Verbindungsabschnitt geteilt werden müssen, bezeichnet,
Transportieren des besagten gemeinsamen Ressourcen-Labelwertes in einem LABEL_SET-Objekt einer Anforderungsnachricht für den Aufbau eines Pfades und in einem GENERALIZED_LABEL-Objekt einer Reservierungsnachricht, wobei der besagte gemeinsame Ressourcen-Labelwert in Kombination mit einem Reservierungsstilfeld-Wert, welche für eine eindeutige Teilungsanforderung der besagten Ressourcen zwischen dem besagten primären (L1) und dem besagten sekundären (L2 Verbindungspfad repräsentativ ist, und den unterschiedlichen Schutzfeld-Werten für den besagten primären (L1) und den besagten sekundären (L2) Verbindungspfad transportiert wird,
und lokales Zuteilen der besagten geteilten Ressourcen an entweder den besagten primären (L1) oder den besagten sekundären (L2) Verbindungspfad gemäß den besagten Schutzfeld-Werten, welcher eindeutig denjenigen Verbindungspfad, der die besagten geteilten Ressourcen benutzt, bestimmen.

2. Verfahren nach Anspruch 1, **dadurch gekennzeichnet, dass**, um die nicht auf Paketen basierenden Ressourcen an dem Eingangs- und Ausgangsknoten zu teilen, der besagte Austausch in den folgenden Schritten besteht:
- Ein erster Schritt, in welchem der besagte Eingangsknoten (N1) eine erste Anforderungsnachricht für den Aufbau eines Pfades, welche die Verbindungskennung des besagten primären Verbindungspfades (L1), den besagten gemeinsamen Ressourcenlabel-Wert, den Reservierungsstilfeld-Wert, welcher für eine eindeutige Teilungsanforderung von ausgewählten Ressourcen repräsentativ ist, und einen ersten Schutzfeld-Wert, welcher bestimmt, dass der besagte primäre Verbindungspfad (L1) berechtigt ist, die besagten ausgewählten geteilten Ressourcen, zu nutzen, enthält, an den ersten Ausgangsknoten (N5) überträgt,
- ein zweiter Schritt, in welchem der besagte Ausgangsknoten (N5) nach der Verarbeitung der besagten ersten Anforderungsnachricht für den Aufbau des Pfades eine erste Reservierungsnachricht, welche die Verbindungskennung des besagten primären Verbindungspfades (L1), den besagten gemeinsamen Ressourcenlabel-Wert, den besagten Reservierungsstilfeld-Wert, welcher für die eindeutige Teilungsanforderung von Ressourcen repräsentativ ist, und den besagten ersten Schutzfeld-Wert enthält, stromaufwärts an den besagten Eingangsknoten (N1) überträgt,
- ein dritter Schritt, in welchem der besagte Eingangsknoten (N1) eine zweite Anforderungsnachricht für den Aufbau eines Pfades, welche die Verbindungskennung des besagten sekundären Verbindungspfades (L2), den besagten gemeinsamen Ressourcenlabel-Wert, den besagten Reservierungsstilfeld-Wert, welcher für die eindeutige Teilungsanforderung von ausgewählten Ressourcen repräsentativ ist, und einen zweiten Schutzfeld-Wert, welcher bestimmt, dass der besagte sekundäre Verbindungspfad (L2) dazu bestimmt ist, den besagten primären Verbindungspfad (L1) mit den besagten geteilten Ressourcen zu schützen, enthält; an den besagten Ausgangsknoten (N5) überträgt,
- ein vierter Schritt, in welchem der besagte Ausgangsknoten (N5) nach der Verarbeitung der besagten zweiten Anforderungsnachricht für den Aufbau des Pfades eine zweite Reservierungsnachricht, welche die Verbindungskennung des besagten sekundären Verbindungspfades (L2), den besagten gemeinsamen Ressourcenlabel-Wert, den besagten Reservierungsstilfeld-Wert, welcher für die eindeutige Teilungsanforderung von Ressourcen repräsentativ ist, und den besagten zweiten Schutzfeld-Wert enthält, an den besagten Eingangsknoten (N1) überträgt.

3. Verfahren nach einem der Ansprüche 1 und 2, **dadurch gekennzeichnet, dass**, wenn eine Umleitung des Verkehrs auf den besagten sekundären Verbindungspfad (L2) erforderlich ist, der besagte Eingangsknoten (N1) eine Anforderungsnachricht für den Aufbau des Pfades, welche die Verbindungskennung des besagten primären Verbindungspfades (L1), den besagten gemeinsamen Ressourcenlabel-Wert, den besagten Reservierungsstilfeld-Wert, welche für die eindeutige Teilungsanforderung von ausgewählten Ressourcen repräsentativ ist, und den besagten zweiten Schutzfeld-Wert, welcher bestimmt, dass der besagte primäre Verbindungspfad (L1) dazu bestimmt ist, den besagten sekundären Verbindungspfad (L2) mit den besagten ausgewählten geteilten Ressourcen zu schützen, enthält, an den besagten Ausgangsknoten (N5) überträgt.

4. Verfahren nach einem der Ansprüche 1 bis 3, **dadurch gekennzeichnet, dass** man, wenn eine Änderung der besagten ausgewählten Ressourcen erforderlich ist, die folgenden Schritte vorsieht:
- Einen ersten Schritt, in welchem der besagte Eingangsknoten (N1) eine erste Anforderungsnachricht für den Aufbau eines Pfades, welche die Verbindungskennung des besagten primären Verbindungspfades (L1), den besagten gemeinsamen Ressourcenlabel-Wert, einen geänderten Ressourcenfeld-Wert, den besagten Reservierungsstilfeld-Wert, welche für die eindeutige Teilungsanforderung von geänderten Ressourcen repräsentativ ist, und den besagten ersten Schutzfeld-Wert, welcher bestimmt, dass der besagte primäre Verbindungspfad (L1) berechtigt ist, die besagten geänderten geteilten Ressourcen zu nutzen, enthält, an den ersten Ausgangsknoten (N5) überträgt,
- einen zweiten Schritt, in welchem der besagte Eingangsknoten (N1) eine zweite Anforderungsnachricht für den Aufbau des Verbindungspfades, welche die Verbindungskennung des besagten sekundären Verbindungspfades (L2), den besagten gemeinsamen Ressourcenlabel-Wert, den besagten geänderten Ressourcenfeld-Wert, den besagten Reservierungsstilfeld-Wert, welcher für die eindeutige Teilungsanforderung der geänderten Ressourcen repräsentativ ist, und den besagten zweiten Schutzfeld-Wert, welcher bestimmt, dass der besagte sekundäre Verbindungspfad (L2) dazu bestimmt ist, den besagten primären Verbindungspfad (L1) mit den besagten geänderten Ressourcen zu schützen und seine Ressourcen mit dem besagten primären Verbindungspfad (L1) teilt, enthält, an den besagten Ausgangsknoten (N5) überträgt,
- einen dritten Schritt, in welchem der besagte Eingangsknoten (N1) eine dritte Anforderungsnachricht für den Aufbau eines Pfades, welche die Verbindungskennung des besagten primären Verbindungspfades (L1), den besagten gemeinsamen Ressourcenlabel-Wert, den besagten Reservierungsstilfeld-Wert, welcher für die eindeutige Teilungsanforderung von geänderten Ressourcen repräsentativ ist, und den besagten zweiten Schutzfeld-Wert, welcher bestimmt, dass der besagte primäre Verbindungspfad (L1) dazu bestimmt ist, den besagten sekundären Verbindungspfad (L2) mit den besagten geänderten Ressourcen zu schützen, enthält, an den besagten Ausgangsknoten (N5) überträgt, und
- einen vierten Schritt, in welchem der besagten Eingangsknoten (N1) eine vierte Anforderungsnachricht für den Aufbau des Pfades, welche die Verbindungskennung des besagten sekundären Verbindungspfades (L2), den besagten gemeinsamen Ressourcenlabel-Wert, den besagten Reservierungsstilfeld-Wert, welcher für die eindeutige Teilungsanforderung von geänderten Ressourcen repräsentativ ist, und den besagten ersten Schutzfeld-Wert, welcher bestimmt, dass der besagte sekundäre Verbindungspfad (L2) berechtigt ist, die besagten geänderten Ressourcen zu nutzen, enthält, an den besagten Ausgangsknoten (N5) überträgt.

5. Verfahren nach Anspruch 4, **dadurch gekennzeichnet, dass**
- bei Durchführen des besagten ersten und des besagten dritten Schrittes die besagte erste und die besagte dritte Anforderungsnachricht für den Aufbau des Pfades weiterhin jeweils ein Assoziationsfeld enthält, dessen Wert gleich der Verbindungskennung des besagten sekundären Verbindungspfades list, und
- bei Durchführen des besagten zweiten und des besagten vierten Schrittes die besagte zweite und die besagte vierte Anforderungsnachricht für den Aufbau des Pfades weiterhin jeweils ein Assoziationsfeld enthält, dessen Wert gleich der Verbindungskennung des besagten primären Verbindungspfades (L1) ist.

6. Verfahren nach einem der Ansprüche 4 und 5, **dadurch gekennzeichnet, dass**, wenn eine Umleitung des über den besagten primären Verbindungspfad (L1) transportierten Verkehrs erforderlich ist, der besagte Eingangsknoten (N1) eine neue Anforderungsnachricht für den Aufbau eines Pfades, welche die Verbindungskennung des besagten primären Verbindungspfades (L1), den besagten gemeinsamen Ressourcenlabel-Wert, den besagten neuen Reservierungsstilfeld-Wert, welcher für die eindeutige Teilungsanforderung von neuen ausgewählten Ressourcen repräsentativ ist, und den besagten zweiten Schutzfeld-Wert, welcher bestimmt, dass der besagte primäre Verbindungspfad (L1) dazu bestimmt ist, den besagten sekundären Verbindungspfad (L2) mit den besagten neuen geänderten geteilten Ressourcen zu schützen, enthält, an den besagten Ausgangsknoten (N5) überträgt.

7. Verfahren nach Anspruch 1, **dadurch gekennzeichnet, dass** der besagte Eingangsknoten (N1) und der besagte Ausgangsknoten (N5) Router einer IP/MPLS-Netzwerkschicht sind, wobei die besagten Verbindungspfade Knoten (N2-N4) eines optischen Transportnetzwerks zwischen den besagten Routern durchqueren, wobei sich mindestens eine gemeinsame Verbindungsstrecke zwischen dem Eingangsknoten (N1) und den besagten optischen Knoten (N2) erstreckt.

8. Labelvermittelter Knoten (N1) für ein nicht auf Paketen basierendes labelvermitteltes Kommunikationsnetzwerk, wobei der besagte Knoten umfasst:
Signalisierungsmittel (MS), ausgelegt für den Austausch von Signalisierungsnachrichten mit anderen labelvermittelten Knoten (Ni) des besagten Netzwerks gemäß dem RSVP-TE-Signalisierungsprotokoll, um die Reservierung von Ressourcen auf Verbindungspfaden (L1, L2), welche jeweils mit einer Verbindungskennung assoziiert sind und an dem besagten Knoten (N1) beginnen, zu ermöglichen,
eine Datenstruktur (S1, S2), welche für den Reservierungszustand der mit den besagten Verbindungspfaden (L1, L2) assoziierten gesteuerten Ressourcen repräsentativ ist,
und Steuerungsmittel (MC), welche, wenn der Aufbau eines primären (L1) und eines sekundären (L2) Verbindungspfades zwischen dem besagten Knoten (N1) und einem Ausgangsknoten (N5) des besagten Netzwerks, die einander ersetzen können, erforderlich ist, dazu ausgelegt sind, den besagten Signalisierungsmitteln (MS) zu befehlen, Signalisierungsnachrichten, welche die besagten eindeutigen Verbindungskennungen sowie unterschiedliche Schutzfeld-Werte für den besagten primären (L1) und den besagten sekundären (L2) Verbindungspfad enthalten, mit verschiedenen Zwischenknoten bis zum Ausgangsknoten (N5) auszutauschen,
wobei die besagten Signalisierungsmittel (MS) für das Durchführen der folgenden Schritte ausgelegt sind:
- Übertragen einer ersten Anforderungsnachricht für den Aufbau eines Verbindungspfades, welche die Verbindungskennung des besagten primären Verbindungspfades (L1) sowie einen ersten Schutzfeld-Wert enthält, an den besagten Ausgangsknoten (MS),
- Aktualisierten der besagten Datenstruktur (S1, S2) bei Empfang einer ersten Reservierungsnachricht von dem besagten Ausgangsknoten (N5), welche die Verbindungskennung des besagten primären Verbindungspfades (L1) und den besagten ersten Schutzfeld-Wert enthält,
- Übertragen einer zweiten Anforderungsnachricht für den Aufbau eines Pfades, welche die Verbindungskennung des besagten sekundären Verbindungspfades (L2) sowie einen zweiten Schutzfeld-Wert, welche bestimmt, dass der besagte sekundäre Verbindungspfad (L2) dazu bestimmt ist, den besagten primären Verbindungspfad (L1) zu schützen, enthält, an den besagten Ausgangsknoten (N5), und
- erneutes Aktualisieren der besagten Datenstruktur (S1, S2) bei Empfang einer zweiten Reservierungsnachricht von dem besagten Ausgangsknoten (N5), welche die Verbindungskennung des besagten sekundären Verbindungspfades (L2) und den besagten ersten Schutzfeld-Wert enthält, **dadurch gekennzeichnet, dass**:
- die besagten Anforderungsnachrichten für den Aufbau eines Pfades mit einem Labelwert für nicht auf Paketen basierende Ressourcen, welcher dem besagten primären (L1) und dem besagten sekundären (L2) Verbindungspfad gemeinsam ist, und einem Reservierungsstilfeld-Wert, weicher für eine eindeutige Teilungsanforderung von zwischen dem besagten primären (L1) und dem besagten sekundären (L2) ausgewählten Ressourcen repräsentativ ist, wobei der besagte Labelwert nicht auf Paketen basierende Ressourcen, die von dem besagten primären und dem besagten sekundären Verbindungspfad auf mindestens einem dem besagten primären und dem besagten sekundären Verbindungspfad gemeinsamen Verbindungsabschnitt an dem besagten Knoten gemeinsam zu nutzen sind, bezeichnet, und
- wenn die besagten empfangenen Reservierungsnachrichten den besagten gemeinsamen Labelwert von Ressourcen und den besagten Reservierungsstilfeld-Wert, welcher für die eindeutige Teilungsanforderung von ausgewählten Ressourcen repräsentativ ist, enthalten, der besagte Knoten fähig ist, dem besagten primären Verbindungspfad (L1) die besagten geteilten Ressourcen gemäß den Schutzfeld-Werten, welche bestimmen, dass der besagte primäre Verbindungspfad (L1) berechtigt ist, die besagten ausgewählten geteilten Ressourcen zu nutzen, zuzuteilen.

9. Knoten nach Anspruch 8, **dadurch gekennzeichnet, dass**, wenn eine Umleitung des Verkehrs auf dem besagten sekundären Verbindungspfad (L2) erforderlich ist, die besagten Steuerungsmittel (MC) dazu ausgelegt sind, den besagten Signalisierungsmitteln (MS) zu befehlen, eine Anforderungsnachricht für den Aufbau eines Pfades, welche die Verbindungskennung des besagten primären Verbindungspfades (L1), den besagten gemeinsamen Ressourcenlabel-Wert, den besagten Reservierungsstilfeld-Wert, welcher für die eindeutige Teilungsanforderung von ausgewählten Ressourcen repräsentativ ist, sowie den besagten zweiten Schutzfeld-Wert, welcher bestimmt, dass der besagte primäre Verbindungspfad (L1) dazu bestimmt ist, den besagten sekundären Verbindungspfad (L2) mit den besagten ausgewählten geteilten Ressourcen zu schützen, enthält, an den besagten Ausgangsknoten (N5) zu übertragen.

10. Knoten nach Anspruch 9, **dadurch gekennzeichnet, dass** die besagten Steuerungsmittel (MC) dazu ausgelegt sind, bei Empfang, an den besagten Signalisierungsmitteln (MS), einer ersten oder einer zweiten Anforderungsnachricht für den Aufbau eines Pfades von einem sogenannten Eingangsknoten (N1) deren Inhalt zu analysieren und den besagten Signalisierungsmitteln (MS) zu befehlen, die Datenstruktur (S1, S2) zu aktualisieren und eine erste oder eine zweite Reservierungsnachricht, welche die Verbindungskennung des besagten primären (L1) oder des besagten sekundären (L2) Verbindungspfades, den besagten gemeinsamen Ressourcenlabel-Wert, den besagten Reservierungsstilfeld-Wert, welcher für die eindeutige Teilungsanforderung von ausgewählten Ressourcen repräsentativ ist, und den besagten ersten Schutzfeld-Wert enthält, an den besagten Eingangsknoten (N1) zu übertragen.

11. Knoten nach einem der Ansprüche 8 bis 10, **dadurch gekennzeichnet, dass**, wenn eine Änderung der besagten ausgewählten Ressourcen erforderlich ist, die besagten Steuerungsmittel (MC) dazu ausgelegt sind, den besagten Signalisierungsmitteln (MS) zu befehlen, folgende Nachrichten an den besagten Ausgangsknoten (N5) zu übertragen:
- Eine erste Anforderungsnachricht für den Aufbau eines Pfades, welche die Verbindungskennung des besagten primären Verbindungspfades (L1), den besagten gemeinsamen Ressourcenlabel-Wert, einen geänderten Ressourcenfeld-Wert, den besagten Reservierungsstilfeld-Wert, welcher für die eindeutige Teilungsanforderung der geänderten Ressourcen repräsentativ ist, und den besagten ersten Schutzfeld-Wert, welcher spezifiziert, dass der besagte primäre Verbindungspfad (L1) berechtigt ist, die besagten geänderten Ressourcen zu nutzen, enthält;
- eine zweite Anforderungsnachricht für den Aufbau eines Pfades, welche die Verbindungskennung des besagten sekundären Verbindungspfades (L2), den besagten gemeinsamen Ressourcenlabel-Wert, den besagten geänderten Ressourcenfeld-Wert, den besagten Reservierungsstilfeld-Wert, welche für die eindeutige Teilungsanforderung der geänderten Ressourcen repräsentativ ist, und den besagten zweiten Schutzfeld-Wert, welcher bestimmt, dass der besagte sekundäre Verbindungspfad (L2) dazu bestimmt ist, den besagten primären Verbindungspfad (L1) mit den besagten geänderten Ressourcen zu schützen, enthält,
- eine dritte Anforderungsnachricht für den Aufbau eines Pfades, welche die Verbindungskennung des besagten primären Verbindungspfades (L1), den besagten gemeinsamen Ressourcenlabel-Wert, den besagten Reservierungsstilfeld-Wert, welcher für die eindeutige Teilungsanforderung der geänderten Ressourcen repräsentativ ist, und den besagten zweiten Schutzfeld-Wert, welcher bestimmt, dass der besagte primäre Verbindungspfad (L1) dazu bestimmt ist, den besagten sekundären Verbindungspfad (L2) mit den besagten geänderten Ressourcen zu schützen, enthält,
- eine vierte Anforderungsnachricht für den Aufbau eines Pfades, welche die Verbindungskennung des besagten sekundären Verbindungspfades (L2), den besagten gemeinsamen Ressourcenlabel-Wert, den besagten Reservierungsstilfeld-Wert, welcher für die eindeutige Teilungsanforderung der geänderten Ressourcen repräsentativ ist, und den besagten ersten Schutzfeld-Wert, welcher bestimmt, dass der besagte sekundäre Verbindungspfad (L2) berechtigt ist, die besagten geänderten Ressourcen zu nutzen, enthält,

12. Knoten nach Anspruch 11, **dadurch gekennzeichnet, dass** die besagten Steuerungsmittel (MC) dazu ausgelegt sind, den besagten Signalisierungsmitteln (MS) zu befehlen, der besagten ersten und der besagten dritten Anforderungsnachricht für den Aufbau eines Pfades ein Assoziationsfeld hinzuzufügen, dessen Wert gleich der Verbindungskennung des besagten sekundären Verbindungspfades (L2) ist, und der besagten zweiten und der besagten vierten Anforderungsnachricht für den Aufbau eines Pfades ein Assoziationsfeld hinzuzufügen, dessen Wert gleich der Verbindungskennung des besagten primären Verbindungspfades (L1) ist.

13. Knoten nach einem der Ansprüche 11 und 12, **dadurch gekennzeichnet, dass**, wenn eine Umleitung des Verkehrs auf dem besagten primären Verbindungspfad (L1) erforderlich ist, die besagten Steuerungsmittel (MC) dazu ausgelegt sind, den besagten Signalisierungsmitteln (MS) zu befehlen, eine Anforderungsnachricht für den Aufbau eines Pfades, welche die Verbindungskennung des besagten primären (L1) Verbindungspfades, den besagten gemeinsamen Ressourcenlabel-Wert, den besagten Reservierungsstilfeld-Wert, welcher für die eindeutige Teilungsanforderung der geänderten Ressourcen repräsentativ ist, und den besagten zweiten Schutzfeld-Wert, welcher bestimmt, dass der besagte primäre Verbindungspfad (L1) dazu bestimmt ist, den besagten sekundären Verbindungspfad (L2) mit den besagten geänderten Ressourcen zu schützen, enthält, an den besagten Ausgangsknoten (N5) zu übertragen.

14. Knoten nach einem der Ansprüche 8 bis 13, **dadurch gekennzeichnet, dass** die besagten Steuerungsmittel (MC) den besagten Signalisierungsmitteln (MS) angehören.

## Claims

1. A method for controlling resource reservation for connection paths (L1, L2), each associated with a connection identifier, of a label-switching communication network of the "non-packet" type, comprising label-switching nodes (N1-N5) between which said connection paths (L1, L2) can be established and which each comprise a data structure (S1, S2) representative of the resource reservation status of each connection path, wherein, in the event of a need to establish primary (L1) and secondary (L2) connection paths, which may be substituted for one another, between two nodes, an input node (N1) and an output node (N5), of said network, steps are performed consisting of exchanging signaling messages between said input (N1) and output (N5) nodes containing said distinct connection identifiers, and different protection field values for said primary (L1) and secondary (L2) connection paths, said signaling messages being transmitted in accordance with the signaling protocol RSVP-TE and comprising path establishment request messages and reservation messages, and of updating the data structures within all of the nodes located between said input (N1) and output (N5) nodes by means of the information transported by said exchanged signaling messages, **characterized in that** it comprises the steps consisting of:
assigning a common non-packet resource label value to said primary and secondary connection paths, said label value designating non-packet resources that must be shared between said primary and secondary connection paths over at least one link common to said primary and secondary connection paths,
transporting said common resource label value within a LABEL_SET object of a path establishment request message and within a GENERALIZED_LABEL object of a reservation message, said common resource label value being transported in combination with a reservation style field value representative of an explicit request to share said resources between said primary (L1) and secondary (L2) connection paths and the different protection field values for said primary (L1) and secondary (L2) connection paths, and locally allocating said shared resources to one of said primary (L1) and secondary (L2) connection paths based on said protection field values, which explicitly specify which one uses said shared resources.

2. A method according to claim 1, **characterized in that**, in order to share non-packet resources within the input and output nodes, said exchange consists of:
- a first step in which said input node (N1) transmits to said output node (N5) a first path establishment request message comprising the connection identifier of said primary connection path (L1), said common resource label value, the reservation style field value representative of an explicit request to share chosen resources, and a first protection field value specifying that said primary connection path (L1) is authorized to use said chosen shared resources,
- a second step in which said output node (N5), after processing said first path establishment request message, transmits back to said input node (N1) a first reservation message comprising the connection identifier of said primary connection path (L1), said common resource label value, said reservation style field value representative of the explicit request to share resources, and said first protection field value,
- a third step in which said input node (N1) transmits to said output node (N5) a second path establishment request message comprising the connection identifier of said secondary connection path (L2), said common resource label value, said reservation style field value representative of the explicit request to share resources, and a second protection field value specifying that said secondary connection path (L2) is intended to protect said primary connection path (L1) with said shared resources, and
- a fourth step in which said output node (N5), after processing said second path establishment request message, transmits to said input node (N1) a second reservation message comprising the connection identifier of said secondary connection path (L2), said common resource label value, said reservation style field value representative of an explicit request to share chosen resources, and said second protection field value.

3. A method according to one of the claims 1 and 2, **characterized in that** if there is a need to reroute traffic onto said secondary connection path (L2), said input node (N1) transmits to said output node (N5) a path establishment request message comprising the connection identifier of said primary connection path (L1), said common resource label value, said reservation style field value representative of the explicit request to share chosen resources, and said second protection field value specifying that said primary connection path (L1) is intended to protect said secondary connection path (L2) with said chosen shared resources.

4. A method according to one of the claims 1 to 3, **characterized in that** if there is a need to modify said chosen resources, there is provided:
- a first step in which said input node (N1) transmits to said output node (N5) a first path establishment request message comprising the connection identifier of said primary connection path (L1), said common resource label value, a modified resource field value, said reservation style field value representative of an explicit request to share the modified resources, and said first protection field value specifying that said primary connection path (L1) is authorized to use said modified shared resources,
- a second step in which said input node (N1) transmits to said output node (N5) a second path establishment request message comprising the connection identifier of said secondary connection path (L2), said common resource label value, said modified resource field value, said reservation style field value representative of the explicit request to share the modified resources, and said second protection field value specifying that said secondary connection path (L2) is intended to protect said primary connection path (L1) with said shared resources and shares its resources with said primary connection path (L1),
- a third step in which said input node (N1) transmits to said output node (N5) a third path establishment request message comprising the connection identifier of said primary connection path (L1), said common resource label value, said reservation style field value representative of the explicit request to share the modified resources, and said second protection field value specifying that said primary connection path (L1) is intended to protect said secondary connection path (L2) with said shared resources, and
- a fourth step in which said input node (N1) transmits to said output node (N5) a fourth path establishment request message comprising the connection identifier of said secondary connection path (L2), said common resource label value, said reservation style field value representative of the explicit request to share the modified resources, and said first protection field value specifying that said secondary connection path (L2) is authorized to use said shared modified resources.

5. A method according to claim 4, **characterized in that**:
- in said first and third steps, said first and third path establishment request messages each further comprise an association field whose value is equal to the connection identifier of said secondary connection path (L2), and
- in said second and fourth steps, said second and fourth path establishment request messages each further comprise an association field whose value is equal to the connection identifier of said primary connection path (L1).

6. A method according to one of the claims 4 to 5, **characterized in that** if there is a need to reroute the traffic transported by said primary connection path (L1), said input node (N1) transmits to said output node (N5) a new path establishment request message comprising the connection identifier of said primary connection path (L1), said common resource label value, said new reservation style field value representative of the explicit request to share chosen resources, and said second protection field value specifying that said primary connection path (L1) is intended to protect said secondary connection path (L2) with said new modified shared resources.

7. A method according to claim 1, **characterized in that** said input (N1) and output (N5) nodes are routers of an IP/MPLS network layer, said connection paths traversing nodes (N2-N4) of an optical transport network between said routers, said at least one common link expending between the input node (N1) and one of said optical nodes (N2).

8. A label switching node (N1) for a label-switching communication network of the "non-packet" type, said node comprising:
signaling means (MS) arranged to exchange signaling messages in accordance with the signaling protocol RSVP-TE with other label switching nodes (Ni) of said network, to allow the reservation of connection path resources (L1, L2), each associated with a connection identifier and beginning at said node (N1),
a data structure (S1, S2) representative of the reservation status of the controlled resources associated with said connection paths (L1, L2),
and control means (MC) arranged, if there is a need to establish primary (L1) and secondary (L2) connection paths, which may be substituted for one another, between said node (N1) and an output node (N5) of said network, to order said signaling means (MS) to exchange with different intermediate nodes all the way to said output node (N5) signaling messages containing said distinct connection identifiers, and different protection field values for said primary (L1) and secondary (L2) connection paths,
said signaling means (MS) being arranged to
- transmit to said output node (MS) a first path establishment request message comprising the connection identifier of said primary connection path (L1), and a first protection value field,
- update said data structure (S1, S2) in the event that a first reservation message is received from said output node (N5) that comprises the connection identifier of said primary connection path (L1), and said first protection value field,
- transmit to said output node (N5) a second path establishment request message comprising the connection identifier of said secondary connection path (L2), and a second protection field value specifying that said secondary connection path (L2) is intended to protect said primary connection path (L1), and
- again update said data structure (S1, S2) in the event that a second reservation message is received from said output node (N5) that comprises the connection identifier of said secondary connection path (L2), and said second protection value field, **characterized in that**:
said path establishment request messages are transmitted with a non-packet resource label value common to said primary (L1) and secondary (L2) connection paths and a reservation style field value representative of an explicit request to share said resources between said primary (L1) and secondary (L2) connection paths, said label value designating non-packet resources that must be shared between said primary and secondary connection paths over at least one link common to said primary and secondary connection paths at said node, and
- if said received reservation messages contain said common resource label value and said reservation style field value representative of an explicit request to share chosen resources, said node is capable of locally allocating said shared resources to said primary connection path (L1) in accordance with the protection field values that specify that said primary connection path (L1) is authorized to use said chosen shared resources.

9. A node according to claim 8, **characterized in that** if there is a need to reroute traffic onto said secondary connection path (L2), said control means (MC) are arranged to order said signaling means (MS) to transmit to said output node (N5) a path establishment request message comprising the connection identifier of said primary connection path (L1), said common resource label value, said reservation style field value representative of the explicit request to share chosen resources, and said second protection field value specifying that said primary connection path (L1) is intended to protect said secondary connection path (L2) with said chosen shared resources.

10. A node according to claim 9, **characterized in that** said control means (MC) are arranged, in the event that said signaling means (MS) receive a first or second path establishment request message from a so-called input node (N1), to analyze its content and order said signaling means (MS) to update the data structure (S1, S2) and transmit to said input node (N1) a first or second reservation message comprising the connection identifier of said primary (L1) or secondary (L2) connection path, said common resources label value, said réservation style field value representative of the explicit request to share chosen resources, and said first or second protection field value.

11. A node according to one of the claims 8 to 10, **characterized in that** said control means (MC) are arranged, if there is a need to modify said chosen resources, to order said signaling means (MS) to transmit to said output node (N5):
- a first path establishment request message comprising the connection identifier of said primary connection path (L1), said common resource label value, a modified resource field value, said reservation style field value representative of the explicit request to share the modified resources, and said first protection field value specifying that said primary connection path (L1) is authorized to use said chosen modified resources,
- a second path establishment request message comprising the connection identifier of said secondary connection path (L2), said common resource label value, said modified resource field value, said reservation style field value representative of the explicit request to share the modified resources, and said second protection field value specifying that said secondary connection path (L2) is intended to protect said primary connection path (L1) with said modified resources,
- a third path establishment request message comprising the connection identifier of said primary connection path (L1), said common resource label value, said reservation style field value representative of the explicit request to share the modified resources, and said second protection field value specifying that said primary connection path (L1) is intended to protect said secondary connection path (L2) with said shared resources, and
- a fourth path establishment request message comprising the connection identifier of said secondary connection path (L2), said common resource label value, said reservation style field value representative of the explicit request to share the modified resources, and said first protection field value specifying that said secondary connection path (L2) is authorized to use said shared modified resources.

12. A node according to claim 11, **characterized in that** said control means (MC) are arranged to order said signaling means (MS) to add to said first and third path establishment request messages an association field whose value is equal to the connection identifier of said secondary connection path (L2), and add to said second and fourth path establishment request messages an association field whose value is equal to the connection identifier of said primary connection path (L1).

13. A node according to one of the claims 11 and 12, **characterized in that** said control means (MC) are arranged, if there is a need to reroute traffic onto said primary connection path (L1), to order said signaling means (MS) to transmit to said output node (N5) a path establishment request message comprising the connection identifier of said primary connection path (L1), said common resource label value, said reservation style field value representative of the explicit request to share the modified resources, and said second protection field value specifying that said primary connection path (L1) is intended to protect said secondary connection path (L2) with said chosen modified resources.

14. A node according to one of the claims 8 to 13, **characterized in that** said control means (MC) form part of said signaling means (MS).
